# EUROPEAN PATENT SPECIFICATION

(11) **EP 3 299 783 B1**
(45) Date of publication and mention of the grant of the patent: **04.11.2020**
(21) Application number: 16190258.0
(22) Date of filing: 23.09.2016
(51) Int. Cl.: G01K 7/42, H01F 27/40, H02H 7/04, H01F 27/12, H02H 6/00

(54) **THERMAL MONITORING OF A POWER DEVICE**
THERMISCHE ÜBERWACHUNG EINER LEISTUNGSVORRICHTUNG
CONTRÔLE THERMIQUE DE DISPOSITIF DE PUISSANCE

(43) Date of publication of application: 28.03.2018
(73) Proprietor: ABB Power Grids Switzerland AG, 5400 Baden (CH)
(72) Inventor: LANERYD, Tor, 745 93 Enköping (SE); SAMUELSSON, Bertil, 722 45 Västerås (SE); SAERS, Robert, 722 46 Västerås (SE); CHEN, Cathy-Yao, 722 09 Västerås (SE)
(74) Representative: Valea AB

(56) References cited:
- US-A- 4 623 265
- US-A1- 2011 156 918
- US-B1- 6 609 079

## Description

### TECHNICAL FIELD

The present disclosure relates to a method and device for thermal monitoring of a power device.

### BACKGROUND

Heat losses that occur during operation of power devices such as power transformers cause an increase in temperature levels, especially at hotspots. This affects the expected life time of the power device, for example through the ageing of insulation materials. By knowing the exact temperature level, the remaining life time of the power device can be better predicted and expensive failures can be avoided. Thus, a thermal monitoring system can be used to track the temperature level. Such a thermal monitoring system can also act as a control system to take action when certain conditions occur, for example to start a fan or a pump, or to limit the current through the power device.

The monitoring system can be based on temperature measurements. However, it is complicated and expensive to measure temperatures at the actual location of the hotspot, so preferably the hotspot temperature is calculated based on a thermal model and a different temperature measurement such as the tank top oil temperature. Known thermal models are based on electric circuit analogies with thermal impedance based on empirical data from heat run tests or the power device during operation. Unless calibrated with fibre optic measurement, such models risk being inaccurate. Even if a fibre optic sensor is installed, it may be positioned at a different location than the actual hotspot and the model will then give an erroneous value. Furthermore, the hotspot may change position during operation depending on loading curves, cooling control and other external parameters. In such case, the life time expectancy based on ageing of insulation material should be calculated using a time average in all points and not only the hotspot location for certain steady state conditions.

Reasons for not installing sensors everywhere in the transformer include the cost of the sensor, the cost of the installation, and the adverse effect on reliability by introducing additional points of failure. Even if the cost of each sensor and the cost of each installation are relatively low, there may be a large number of locations where temperature information is of interest and the accumulated cost is high. Another reason to avoid installing a sensor near the hotspot is that the sensor itself may block the access of the cooling fluid and cause temperature increase.

Time dependent Computational Fluid Dynamics (CFD) modelling can be used to accurately predict hot spot location and magnitude for power devices under variable loads. Such models are computationally expensive and too large to be used for real-time monitoring of systems. Thermal and pressure linked network models can be used as a cheaper alternative to CFD but with a reduced degree of accuracy.

Since heat transfer in large power devices is too complex to model exactly with a thermal model, fuzzy logic algorithms have been used, as discussed by Enzo Cardillo et al., University of Stuttgart, in the paper "New approach in thermal monitoring of large power devices applied on a 350 MVA ODAF-cooled unit" 2004.

US 2005/0096886 describes a general transformer model for predicting transformer performance in standard tests which are required to be performed by the manufacturer before delivery of a transformer. The model is based on statistics whereby other transformers are identified which have a similar design and it is assumed that these other transformers will exhibit similar performance in the standard tests. To evaluate whether two transformers are similar, a large number of parameters including design data are used. U 6,609,079 B1 describes a thermal simulation model for determining state variables (e.g. average and hot-spot temperatures) of an oil-cooled transformer. US'079 uses a thermohydraulic model which accounts for the status of cooling units.

### SUMMARY

It is an objective of the present invention to provide an improved method of thermal monitoring of a power device by estimating temperature(s) of a heat generating component of the power device.

According to an aspect of the present invention, there is provided a method of thermal monitoring of a power device as defined in claim 1.

According to another aspect of the present invention, there is provided a monitoring system for thermal monitoring of a power device as defined in claim 15.

By means of embodiments of the present invention, temperature(s) in the power device, e.g. a transformer, especially in or at a heat-generating component of the power device, can be estimated, obviating the need to have temperature sensors in every location of interest in the power device during operation.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic sectional side view of an embodiment of a power device in accordance with the present invention.
Fig 2a is a schematic functional block diagram of an embodiment of a thermal monitoring system in accordance with the present invention.
Fig 2b is a schematic functional block diagram of an embodiment of the second computer processing environment of the thermal monitoring system in accordance with the present invention.
Fig 3 is a schematic flow chart of embodiments of a method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

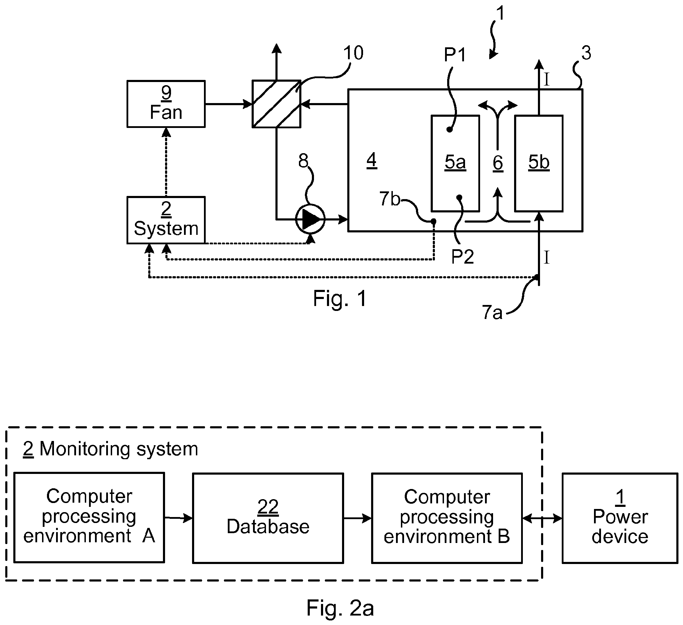

Figure 1 illustrates an embodiment of a power device 1 in accordance with the present invention. The power device 1 may e.g. be a power transformer, a power switch, a power converter or an electrical motor, or the like. The power device comprises a heat-generating component 5 within an enclosure 3, e.g. a tank, filled with a cooling fluid 4, e.g. an oil or ester liquid, or a gas, for transporting heat from the heat-generating component by means of circulation of the cooling fluid which is in contact with the heat-generating component 5. The heat-generating component 5 generates heat due to loading with a current I conducted through the heat-generating component. In the example of the figure, cooling fluid 4 cools the heat generating component 5 e.g. by circulating via a cooling duct 6 through the heat-generating component, between a first part 5a and a second part 5b of the heat-generating component.

The cooling fluid 4 may circulate by natural circulation, or by forced circulation by means of a pump 8 of the power device. The cooling fluid may be cooled by means of being passed through a heat-exchanger 10, e.g. a liquid-liquid heat-exchanger or a gas-liquid heat-exchanger, for example with the gas (e.g. air) driven by a fan 9 or the like.

The power device 1 also comprises sensors 7. A first sensor 7a is configured for performing measurements relating to power losses in the power device. The first sensor 7a could be a sensor that measures the current load I. The power losses may then be calculated as P=RI² where R is the resistance. A second sensor 7b is configured for performing measurements of a reference temperature of the power device 1. The reference temperature may e.g. be top or bottom fluid temperature in the enclosure 3. The reference temperature could also/alternatively be an ambient temperature measurement some distance outside of the enclosure. Additionally or alternatively, the reference temperature could be a conductor temperature somewhere in the power device, or a temperature in any location within the power device. The reference temperature may thus be measured anywhere as long as it is related to the power device, allowing the estimated temperatures to be calculated relative to the reference temperature.

The power device is in accordance with the present invention monitored, and possibly also controlled, by a thermal monitoring system 2. As indicated by the dotted arrows in figure 1, the monitoring system may receive input signals from the first and second sensors 7a and 7b, as well as any other sensors used. If the monitoring system 2 is also used for control of the power device, the system 2 may e.g. output control signals to e.g. control the pump 8 and/or the fan 9.

In accordance with the present invention, at least one temperature, i.e. the temperature in one location point P in or at the heat generating component 5, is estimated. Typically, the location point P is one where it is not possible to measure the temperature by means of a sensor, or where for other reasons a sensor would preferably be avoided. Typically, the respective temperatures in several different location points P, of which two, Pi and P2, are schematically shown in the figure, are automatically estimated and monitored in real time during operation of the power device. Thus, in some embodiments, the executing S6 of the second algorithm comprises real-time estimation of temperatures in at least two separate location points P1 and P2 of the heat generating component 5, where typically none of said location points P1 and P2 are the same as a location point where the temperature may be measured by means of a sensor directly.

Figure 2a illustrates an embodiment of the monitoring system 2. The monitoring system 2 comprises a first computer processing environment A comprising processing means. The first computer processing environment A is configured for executing a first algorithm based on design information about the power device 1 for at least two different operation states of the power device, for deriving coefficients relating to heat transfer in the power device for the at least two different operation states, e.g. two different cooling fluid flow rates or two different current loads, which gives different fluid flow rates unless there is forced circulation of the cooling fluid. The cooling fluid flow rate without forced circulation is determined by the power load and the temperature within the enclosure 3. Alternatively, the power device 1 may have a pump 8 for the cooling fluid that can be turned on or off (forced or natural cooling) and this will then also characterize the operation states. The operations states may alternatively be characterized by the reference temperature. This is the intended cooling fluid of the power device 1. It may be defined by its material properties such as viscosity, density, heat capacity, thermal conductivity, and/or thermal expansion coefficient. It may be possible that the power device 1 has not yet been manufactured and only exists in the form of design drawings at the time the first algorithm is being executed. The input for the first algorithm is design information, e.g. including but not limited to geometrical distances, surface areas, construction materials, cooling equipment and/or power loss distributions. The first algorithm may advantageously be executed several times for several assumed values of power loss levels and reference temperature levels (e.g. the expected input from the first and second sensors 7a and 7b, but since the power device may not yet have been manufactured it will not be the values of actual sensor measurements unless the algorithm is operating in a self-learning mode and a physical operating power device, similar to and acting as a model for the power device 1 for which temperatures will be estimated in real-time). The coefficients could advantageously be heat transfer coefficients, which are related to the flow rate of the cooling fluid nearby the respective locations of the heat generating component 5 which the coefficients relate to, which is related to the overall circulation of the cooling fluid.

The coefficients derived from the first computer processing environment A are stored in a database 22, e.g. a Reduced Order Model (ROM) database, for later use in the second computer processing environment B, also comprising processing means, after the database 22 has been connected thereto to allow information about the stored coefficients to be inputted to the second computer processing environment B. The second computer processing environment B is configured for receiving information about the stored coefficients (from the database 22) and for, during operation of the power device 1, receiving information (from the sensors 7) about power loss measurements performed by the first sensor 7a of the power device and reference temperature measurements performed by the second sensor 7b of the power device. The second computer processing environment B is also configured for executing a second algorithm based on the received coefficient and measurement information for estimating at least one, typically several, temperature of the heat generating component 5 in the power device 1 in real time. In contrast to the execution of the first algorithm, the second algorithm will typically be executed continuously and automatically in the monitoring system 2 during operation of the power device 1.

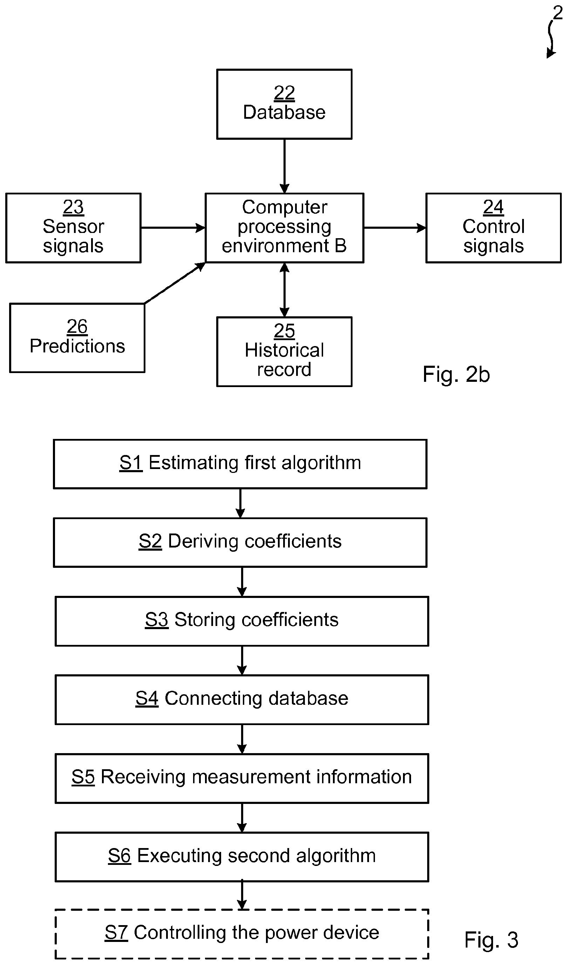

In accordance with the present invention, a thermal monitoring and, optionally, control system 2 may use a dynamic thermal model that is e.g. a Reduced Order Model (ROM) based on a design information. Figure 2b schematically illustrates an embodiment of the second computer processing environment B of the monitoring system 2 which may comprise a Central Processing Unit (CPU) or other processing means, and is connected to the database 22 containing the design coefficients calculated in the first computer processing environment A for the database 22. Also shown are input of sensor signals 23, output of control signals 24, and a data storage device 25 for a historical record of temperature levels. The thermal model may in the second computer processing environment B calculate the entire temperature distribution across the heat generating component 5. This may make it possible to estimate both temperature and location of hotspots in the power device 1, which is not possible with the standard models.

The input sensor signals 23 may for instance comprise current load I, top fluid temperature, bottom fluid temperature, ambient temperature (e.g. air outside of a transformer tank 3) and/or cooler status, of the fluid-filled (e.g. oil) power device 1. Additionally, the second computer processing environment B may receive input of predictions 26, e.g. load forecasts. The load forecast may comprise load patterns, e.g. the current load I at the same time one week before.

The mathematical mode may be dependent on time, and temperatures may be estimated based on a determined load I. Provided that the load I, and other parameters, are constant over time, steady state is achieved. For example, the power device 1 may be at steady state for nominal load but the load is increased (e.g. by 20%). The temperature will then increase over time until it reaches a new steady state for the increased load. However, the new steady state temperature may be too high (above a predetermined threshold of maximum temperature allowed). Since the temperature increases relatively slowly from the nominal load steady state temperature, it may still be possible to run the power device at 20% above nominal load for a limited time period (e.g. 30 minutes) without exceeding the threshold. If after this limited time period, the power device may be returned to nominal load, and the temperature will again decrease over time until the nominal load steady state temperature is reached again, at which time the power device may again be run at 20% above nominal load for 30 minutes. Alternatively, it may be allowed to temporarily exceed the maximum temperature allowed for a predetermined period of time. By means of load forecasting, as mentioned above, cooling fans 9 and/or pumps 8 may be run at increased speed in preparation for known or anticipated load increases above nominal current load.

The output control signals 24 may for instance comprise a trip signal (e.g. to disconnect the power device 1) if hotspot temperature exceeds a threshold value, a maximum current I for protection, and control of cooling fan 9 (for cooling the cooling fluid 4) and/or of a pump 8 of the cooling fluid (regulating the flow of the cooling fluid depending on calculated hotspot temperature) for e.g. oil-forced (OF) or oil-directed (OD) cooling, e.g. in order to avoid a hotspot temperature in the transformer to exceed a predetermined value. The control signals may e.g. be for hierarchical control, where for instance, as a first measure, the cooling fan and/or cooling fluid pump is controlled. If the fan and/or pump is at maximum, the system may, as a further measure, limit the current load on the transformer. If the temperature is still not sufficiently reduced, or there is a critical situation e.g. due to a fault or current spike, the system may, as a final measure, disconnect the transformer (turn off power, shutting down the transformer). Also, output signals may include information to an operator of the power device that e.g. under present conditions the power device may be run at increased load (e.g. 20 or 40% overload) during a specified time period (e.g. 30 minutes for 20% overload or 10 minutes for 40% overload), which may be valuable information to the operator.

Figure 3 illustrates embodiments of the method of the present invention. The method is for thermal monitoring of a power device 1 comprising an enclosure 3 around a heat-generating component 5 in contact with a circulating electrically insulating cooling fluid 4. The power device also comprises a first sensor 7a performing measurements relating to power losses of the power device and a second sensor 7b performing measurements of a reference temperature of the power device. In the first computer processing environment A, a first algorithm is executed S1 based on design information about the power device 1 for at least two different operation states of the power device. From the first algorithm, coefficients relating to heat transfer in the power device are derived S2 for the at least two different operation states of the power device 1. The derived coefficients are stored S3 in a database 22, e.g. a ROM database. The database 22 is connected S4 to the second computer processing environment B, e.g. some time after the deriving S2 of the coefficients. During operation of the power device 1, the second computer processing environment B receives S5 information about the measurements performed by the first sensor 7a and the second sensor 7b. In the second computer processing environment B, a second algorithm is executed S6 based on the stored S3 coefficients and on the received S5 measurement information for estimating at least one temperature of the heat generating component 5 in the power device 1 in real time.

Optionally, the power device 1 is controlled S7 based on the estimated at least one temperature. The controlling S7 may e.g. comprise controlling a flow rate of a flow of the cooling fluid 4, e.g. through a cooling duct 6 through the heat-generating component 5 and/or controlling a current load I of the power device 1 and/or disconnecting the power device 1 in response to the estimated at least one temperature exceeding a predefined threshold value.

In some embodiments, the execution S6 of the second algorithm comprises a prognosis of future temperature values based on altered or unaltered operating conditions, and the power device 1 is controlled S7 to prevent at least one temperature exceeding a predefined threshold value. Thus, in addition to estimating the at least one temperature by means of the second algorithm, also a future temperature may be estimated.

In some embodiments of the present invention, the estimated temperature of at least one location point P is saved in a historical record 25, e.g. a database. The historical record may then be used to estimate the ageing of e.g. insulation in the power device.

In some embodiments of the present invention, the derived S2 coefficients are systematically adjusted to better correlate to the received S5 measurement information.

In some embodiments of the present invention, the monitoring system 2 can, by means of the second algorithm, estimate the measurement values of at least one of the first sensor 7a or second sensor 7b for allowing continued operation of the power device 1 in case the sensor values become unavailable.

In some embodiments of the present invention, design calculation in the first computer processing environment A may be performed e.g. either with CFD or thermal network modelling. The ROM may calculate temperatures based on a boundary condition h^{∗}ΔT where h is a heat transfer coefficient computed from the design calculation, and ΔT is a temperature difference related to a reference temperature that may be the bottom fluid (e.g. oil) temperature. Alternatively, the reference temperature may be the top fluid (e.g. oil) temperature, or any other temperature within the system that is well defined. The heat transfer coefficient h may vary based on the operating conditions and time history of the transformer. For a variable load, h may be obtained from steady-state design calculations at the maximum and minimum loss levels of the variable load. There may also be a number of intermediate levels. The values of h may be stored in the ROM database. The ROM database may thus contain coefficients (e.g. including the heat transfer coefficient h) for different CFD solutions and/or CFD solutions *per se.*

In particular for natural convection, the heat transfer coefficient h may be imposed with the same time constant as the maximum temperature in the transformer. Alternatively, it may be imposed with the same time constant as the average temperature in the transformer. Alternatively, the time constant may be calculated as t=i/RC where R is the thermal resistance to the reference temperature and C is the lumped thermal capacitance.

In particular for forced convection, the heat transfer coefficient h may change instantaneously with a correction depending on the amount of heat transferred to the cooling fluid, i.e. which is not used to heat up the solid material of the power device.

The monitoring system 2, especially the first computer processing environment B, may contain a functionality for self-learning. This functionality may be based on data from temperature sensors of a physical operating power device which is similar to the power device 1. Values within the ROM database 22 may be altered based on temperature data to achieve a better correspondence between calculated and measured values. In some embodiments of the invention, in case design data is unavailable for a power device the ROM database may consist exclusively of heat transfer coefficients h obtained through the self-learning method, permitting a virtual recreation of design data for the power device. The initial values may be prepared from a generic version of a CFD model which may be based on typical design data for a power device of the same size and functionality. For instance, there may be a temperature sensor, e.g. a fibre optic one, in the power device. By means of a generic mathematical model including coefficient(s) h, small deliberate changes of the coefficient(s) h in the ROM database within predetermined ranges may be made until the calculated temperature at the measuring point of the temperature sensor according to the mathematical model is the same as (or within a predetermined deviation from) the measured temperature of the temperature sensor. An advantage is that the temperature profile over the whole power device, e.g. over the winding of a power transformer, may be calculated by means of the mathematical mode, not only at the point of measurement of a temperature sensor, whereby hotspots anywhere in the power device may be identified. Once the mathematical model is set, e.g. by means of self-learning, it may also be possible to retrace based on previous loads (load cycles) which the power device has been subjected to and thus estimate the ageing/degradation of solid insulation material in the power device from any point in time.

The temperature levels in the power device 1 according to the resolution of the ROM may be stored as a historical record 25 within the data storage device. This data may be used to estimate the remaining life time of the power device. The accuracy of this estimate may be more accurate than an estimate based on hotspot temperature at a single point since the hot spot may move during the operation of the power device, and the degradation of insulation material may depend on the temperature history. The data storage may comprise historical records, e.g. of calculated temperatures in solid insulation material in predefined points within the power device (e.g. a point in each disc of a disc winding). After some time, e.g. a number of years, it is then possible to check through the stored calculated temperature values to estimate how much the insulation has degraded due to high temperatures, the degradation depending on both temperature level and duration at a temperature level. This makes it possible to estimate the condition or expected remaining life time of the power device without taking it out of operation or disassembling it which in itself may have a destructive influence on the remaining life time by exposing it to moisture or other contaminations. For power devices in remote locations, e.g. subsea, it may also be very costly to retrieve the power device for such investigations. Since the location of a hotspot may shift e.g. depending on load, cooling fluid flow rate or other parameters, it may be important to monitor the temperature in different locations and not only where hotspots occur at steady-state. For example, insulation material with a constant high temperature may age faster than insulation material which sometimes has a high temperature and sometimes has a low temperature.

The ROM may be used separately from the monitoring system to design a power device based on a specification of a load curve and operating conditions. An advantage of using the ROM rather than a full time-dependent design calculation is that it is much faster which will permit a more detailed optimization of the power device.

## Claims

1. A method of thermal monitoring of a power device (1) comprising an enclosure (3) around a heat-generating component (5) in contact with a circulating electrically insulating cooling fluid (4), the power device comprising a first sensor (7a) performing measurements relating to power losses of the power device and a second sensor (7b) performing measurements of a reference temperature of the power device, the method comprising:
in a first computer processing environment (A), executing (S1) a first algorithm based on design information about the power device (1) for at least two different operation states of the power device;
from the first algorithm, deriving (S2) coefficients relating to heat transfer in the power device for the at least two different operation states;
storing (S3) the derived coefficients in a database (22);
connecting (S4) the database (22) to a second computer processing environment (B);
during operation of the power device (1), the second computer processing environment (B) receiving (S5) information about the measurements performed by the first sensor (7a) and the second sensor (7b); and
in the second computer processing environment (B), executing (S6) a second algorithm based on the stored coefficients and on the received measurement information for estimating at least one temperature of the heat generating component (5) in the power device (1) in real time;
wherein, in contrast to the execution of the first algorithm, the second algorithm is executed continuously and automatically during operation of the power device (1);
the method being **characterized by**
controlling (S7) the power device (1) based on the estimated at least one temperature;
wherein the different operation states are defined by different current loads (I) which give different fluid flow rates unless there is forced circulation of the cooling fluid.

2. The method of claim 1, wherein the controlling (S7) comprises controlling a flow rate of a flow of the cooling fluid (4), e.g. through a cooling duct (6) through the heat-generating component (5) and/or controlling a current load (I) of the power device (1) and/or disconnecting the power device (1) in response to the estimated at least one temperature exceeding a predefined threshold value.

3. The method of any preceding claim, wherein the execution (S6) of the second algorithm comprises a prognosis of future temperature values, and the power device (1) is controlled (S7) to prevent the at least one temperature exceeding a predefined threshold value.

4. The method of any preceding claim, wherein the executing (S6) of the second algorithm comprises real-time estimation of temperatures in at least two separate location points (P1, P2) of the heat generating component (5).

5. The method of any preceding claim, wherein the executing (S1) of the first algorithm comprises executing the algorithm a plurality of times for different design values of the power device (1).

6. The method of any preceding claim, wherein the first algorithm comprises Computational Fluid Dynamics, CFD, or thermal network modelling.

7. The method of any preceding claim, wherein the first sensor (7a) performs current load (I) measurements on the power device (1).

8. The method of any preceding claim, wherein the second sensor (7b) performs temperature measurements on the cooling fluid (4), e.g. in a top or a bottom part of the enclosure (3), on a conductor in the power device (1), or of an ambient temperature outside of the enclosure (3).

9. The method of any preceding claim, wherein the second algorithm uses a Reduced Order Model, ROM, and wherein the database (22) is an ROM database.

10. The method of claim 9, wherein the ROM estimates temperatures during the executing (S6) of the second algorithm based on a boundary condition h^{∗}ΔT where h is a heat transfer coefficient derived (S2) by the first algorithm, and ΔT is a temperature difference related to the reference temperature, the values of h having been stored (S3) in the ROM database (22).

11. The method of any preceding claim, wherein the first computer processing environment (A) contains functionality for self-learning.

12. The method of claim 11, wherein the self-learning functionality is based on data from temperature sensors of a physical operating power device which is similar to the power device (1).

13. The method of any claim 11-12, wherein the database (22), e.g. ROM database, consists of heat transfer coefficients h obtained through the self-learning method.

14. The method of any preceding claim, wherein the estimated temperature of at least one location point (P) of the heat generating component (5) is saved in a historical record (25).

15. A monitoring system (2) for thermal monitoring of a power device (1) comprising an enclosure (3) around a heat-generating component (5) in contact with a circulating electrically insulating cooling fluid (4), the monitoring system comprising:
a first computer processing environment (A), configured for executing a first algorithm based on design information about the power device (1) for at least two different operation states of the power device, for deriving coefficients relating to heat transfer in the power device for the at least two different operation states;
a database (22) for storing the derived coefficients; and
a second computer processing environment (B), connected to the database (22) and configured for receiving information about the stored coefficients and for, during operation of the power device (1), receiving information about power loss measurements performed by a first sensor (7a) of the power device and reference temperature measurements performed by a second sensor (7b) of the power device, and for executing a second algorithm based on the received coefficients and measurement information for estimating at least one temperature of the heat generating component (5) in the power device (1) in real time, wherein the second algorithm, in contrast to the execution of the first algorithm, is executed continuously and automatically during operation of the power device (1);
**characterized in that** the different operation states are defined by different current loads (I), which give different fluid flow rates unless there is forced circulation of the cooling fluid.

## Patentansprüche

1. Verfahren zur thermischen Überwachung einer Leistungsvorrichtung (1), die ein Gehäuse (3) um eine wärmeerzeugende Komponente (5) in Kontakt mit einer zirkulierenden, elektrisch isolierenden Kühlflüssigkeit (4) umfasst, wobei die Leistungsvorrichtung einen ersten Sensor (7a), der Messungen in Bezug auf Leistungsverluste der Leistungsvorrichtung durchführt, und einen zweiten Sensor (7b) umfasst, der Messungen einer Referenztemperatur der Leistungsvorrichtung durchführt, wobei das Verfahren umfasst:
in einer ersten Computerverarbeitungsumgebung (A), Ausführen (S1) eines ersten Algorithmus auf der Grundlage von Bemessungsinformationen über die Leistungsvorrichtung (1) für mindestens zwei verschiedene Betriebszustände der Leistungsvorrichtung;
aus dem ersten Algorithmus, Ableiten (S2) von Koeffizienten in Bezug auf Wärmeübertragung in der Leistungsvorrichtung für die mindestens zwei verschiedenen Betriebszustände;
Speichern (S3) der abgeleiteten Koeffizienten in einer Datenbank (22);
Verbinden (S4) der Datenbank (22) mit einer zweiten Computerverarbeitungsumgebung (B);
während des Betriebs der Leistungsvorrichtung (1), Empfangen (S5), durch die zweite Computerverarbeitungsumgebung (B), von Informationen über die vom ersten Sensor (7a) und vom zweiten Sensor (7b) durchgeführten Messungen; und
in der zweiten Computerverarbeitungsumgebung (B), Ausführen (S6) eines zweiten Algorithmus, der auf den gespeicherten Koeffizienten und auf den empfangenen Messinformationen basiert, zum Schätzen mindestens einer Temperatur der wärmeerzeugenden Komponente (5) in der Leistungsvorrichtung (1) in Echtzeit;
wobei, im Gegensatz zur Ausführung des ersten Algorithmus, der zweite Algorithmus kontinuierlich und automatisch während des Betriebs der Leistungsvorrichtung (1) ausgeführt wird;
wobei das Verfahren **gekennzeichnet ist durch** Steuern (S7) der Leistungsvorrichtung (1) auf der Grundlage der geschätzten mindestens einen Temperatur;
wobei die verschiedenen Betriebszustände durch verschiedene Stromlasten (I) definiert sind, die unterschiedliche Flüssigkeitsdurchflussraten ergeben, es sei denn, es findet erzwungene Zirkulation der Kühlflüssigkeit statt.

2. Verfahren nach Anspruch 1, wobei das Steuern (S7) das Steuern einer Durchflussrate einer Strömung der Kühlflüssigkeit (4), z. B. durch einen Kühlkanal (6) durch die wärmeerzeugende Komponente (5) und/oder das Steuern einer Stromlast (I) der Leistungsvorrichtung (1) und/oder das Abschalten der Leistungsvorrichtung (1) als Reaktion darauf, dass die geschätzte mindestens eine Temperatur einen vordefinierten Schwellenwert überschreitet, umfasst.

3. Verfahren nach einem der vorhergehenden Ansprüche, wobei die Ausführung (S6) des zweiten Algorithmus eine Prognose zukünftiger Temperaturwerte umfasst und die Leistungsvorrichtung (1) so gesteuert wird (S7), dass verhindert wird, dass die mindestens eine Temperatur einen vordefinierten Schwellenwert überschreitet.

4. Verfahren nach einem der vorhergehenden Ansprüche, wobei die Ausführung (S6) des zweiten Algorithmus die Echtzeitschätzung von Temperaturen an mindestens zwei getrennten Positionspunkten (P1, P2) der wärmeerzeugenden Komponente (5) umfasst.

5. Verfahren nach einem der vorhergehenden Ansprüche, wobei das Ausführen (S1) des ersten Algorithmus das Ausführen des Algorithmus für eine Vielzahl von Malen für verschiedene Bemessungswerte der Leistungsvorrichtung (1) umfasst.

6. Verfahren nach einem der vorhergehenden Ansprüche, wobei der erste Algorithmus "Computational Fluid Dynamics", CFD, oder Modellierung thermischer Netzwerke umfasst.

7. Verfahren nach einem der vorhergehenden Ansprüche, wobei der erste Sensor (7a) Messungen der Stromlast (I) an der Leistungsvorrichtung (1) durchführt.

8. Verfahren nach einem der vorhergehenden Ansprüche, wobei der zweite Sensor (7b) Temperaturmessungen an der Kühlflüssigkeit (4) durchführt, z. B. in einem oberen oder einem unteren Teil des Gehäuses (3), an einem Leiter in der Leistungsvorrichtung (1) oder von einer Umgebungstemperatur außerhalb des Gehäuses (3).

9. Verfahren nach einem der vorhergehenden Ansprüche, wobei der zweite Algorithmus ein "Reduced Order Model", ROM, verwendet und wobei die Datenbank (22) eine ROM-Datenbank ist.

10. Verfahren nach Anspruch 9, wobei das ROM Temperaturen während der Ausführung (S6) des zweiten Algorithmus auf der Grundlage einer Randbedingung h*ΔT schätzt, wobei h ein vom ersten Algorithmus abgeleiteter (S2) Wärmeübertragungskoeffizient und ΔT eine auf die Referenztemperatur bezogene Temperaturdifferenz ist, wobei die Werte von h in der ROM-Datenbank (22) gespeichert (S3) wurden.

11. Verfahren nach einem der vorhergehenden Ansprüche, wobei die erste Computerverarbeitungsumgebung (A) Funktionalität zum Selbstlernen beinhaltet.

12. Verfahren nach Anspruch 11, wobei die Selbstlernfunktionalität auf Daten von Temperatursensoren einer physischen betriebenen Leistungsvorrichtung basiert, die der Leistungsvorrichtung (1) ähnlich ist.

13. Verfahren nach einem der Ansprüche 11 bis 12, wobei die Datenbank (22), z. B. eine ROM-Datenbank, aus Wärmeübergangskoeffizienten h besteht, die durch das Selbstlernverfahren erhalten wurden.

14. Verfahren nach einem der vorhergehenden Ansprüche, wobei die geschätzte Temperatur mindestens eines Positionspunktes (P) der wärmeerzeugenden Komponente (5) in einer Aufzeichnungshistorie (25) gespeichert wird.

15. Überwachungssystem (2) zur thermischen Überwachung einer Leistungsvorrichtung (1), die ein Gehäuse (3) um eine wärmeerzeugende Komponente (5) in Kontakt mit einer zirkulierenden, elektrisch isolierenden Kühlflüssigkeit (4) umfasst, wobei das Überwachungssystem umfasst:
eine erste Computerverarbeitungsumgebung (A), die zum Ausführen eines ersten Algorithmus auf der Grundlage von Bemessungssinformationen über die Leistungsvorrichtung (1) für mindestens zwei verschiedene Betriebszustände der Leistungsvorrichtung ausgelegt ist, zum Ableiten von Koeffizienten in Bezug auf Wärmeübertragung in der Leistungsvorrichtung für die mindestens zwei verschiedenen Betriebszustände;
eine Datenbank (22) zum Speichern der abgeleiteten Koeffizienten; und
eine zweite Computerverarbeitungsumgebung (B), die mit der Datenbank (22) verbunden und dafür ausgelegt ist, Informationen über die gespeicherten Koeffizienten zu empfangen und während des Betriebs der Leistungsvorrichtung (1) Informationen über Leistungsverlustmessungen, die von einem ersten Sensor (7a) der Leistungsvorrichtung durchgeführt werden, und Referenztemperaturmessungen, die von einem zweiten Sensor (7b) der Leistungsvorrichtung durchgeführt werden, zu empfangen, und einen zweiten Algorithmus auf der Grundlage der empfangenen Koeffizienten und der Messinformationen auszuführen, um mindestens eine Temperatur der wärmeerzeugenden Komponente (5) in der Leistungsvorrichtung (1) in Echtzeit zu schätzen, wobei der zweite Algorithmus im Gegensatz zur Ausführung des ersten Algorithmus kontinuierlich und automatisch während des Betriebs der Leistungsvorrichtung (1) ausgeführt wird;
**dadurch gekennzeichnet, dass** die verschiedenen Betriebszustände durch verschiedene Stromlasten (I) definiert sind, die unterschiedliche Flüssigkeitsdurchflussraten ergeben, es sei denn, es findet erzwungene Zirkulation der Kühlflüssigkeit statt.

## Revendications

1. Procédé de contrôle thermique d'un dispositif de puissance (1) comprenant une enceinte (3) autour d'un composant générateur de chaleur (5) en contact avec un fluide de refroidissement électriquement isolant en circulation (4), le dispositif de puissance comprenant un premier capteur (7a) réalisant des mesures relatives aux pertes de puissance du dispositif de puissance, et un second capteur (7b) réalisant des mesures d'une température de référence du dispositif de puissance, le procédé comprenant :
dans un premier environnement de traitement informatique (A), l'exécution (S1) d'un premier algorithme sur la base d'informations de conception concernant le dispositif de puissance (1) pour au moins deux états de fonctionnement différents du dispositif de puissance ;
à partir du premier algorithme, la dérivation (S2) de coefficients relatifs au transfert de chaleur dans le dispositif de puissance pour les au moins deux états de fonctionnement différents ;
le stockage (S3) des coefficients dérivés dans une base de données (22) ;
la connexion (S4) de la base de données (22) à un second environnement de traitement informatique (B) ;
pendant le fonctionnement du dispositif de puissance (1), le second environnement de traitement informatique (B) recevant (S5) des informations concernant les mesures réalisées par le premier capteur (7a) et le second capteur (7b) ; et
dans le second environnement de traitement informatique (B), l'exécution (S6) d'un second algorithme sur la base des coefficients stockés et des informations de mesure reçues pour estimer au moins une température du composant générateur de chaleur (5) dans le dispositif de puissance (1) en temps réel ;
par contraste avec l'exécution du premier algorithme, le second algorithme étant exécuté de manière continue et automatique pendant le fonctionnement du dispositif de puissance (1) ;
le procédé étant **caractérisé par**
la commande (S7) du dispositif de puissance (1) sur la base de l'au moins une température estimée ;
les différents états de fonctionnement étant définis par différentes charges de courant (I) qui donnent des débits de fluide différents à moins qu'il n'y ait une circulation forcée du fluide de refroidissement.

2. Procédé selon la revendication 1, la commande (S7) comprenant la commande d'un débit d'un flux du fluide de refroidissement (4), par exemple au moyen d'un canal de refroidissement (6) au moyen du composant de génération de chaleur (5) et/ou la commande d'une charge de courant (I) du dispositif de puissance (1) et/ou la déconnexion du dispositif de puissance (1) en réponse à l'estimation d'au moins une température dépassant une valeur seuil prédéfinie.

3. Procédé selon l'une quelconque des revendications précédentes, l'exécution (S6) du second algorithme comprenant un pronostic de valeurs de température futures, et le dispositif de puissance (1) étant commandé (S7) pour empêcher l'au moins une température de dépasser une valeur seuil prédéfinie.

4. Procédé selon l'une quelconque des revendications précédentes, l'exécution (S6) du second algorithme comprenant une estimation en temps réel de températures en au moins deux points d'emplacement séparés (P1, P2) du composant générateur de chaleur (5).

5. Procédé selon l'une quelconque des revendications précédentes, l'exécution (S1) du premier algorithme comprenant l'exécution de l'algorithme une pluralité de fois pour différentes valeurs de conception du dispositif de puissance (1).

6. Procédé selon l'une quelconque des revendications précédentes, le premier algorithme comprenant une dynamique des fluides numérique, CFD, ou une modélisation de réseau thermique.

7. Procédé selon l'une quelconque des revendications précédentes, le premier capteur (7a) réalisant des mesures de charge de courant (I) sur le dispositif de puissance (1).

8. Procédé selon l'une quelconque des revendications précédentes, le second capteur (7b) réalisant des mesures de température sur le fluide de refroidissement (4), par exemple dans une partie supérieure ou inférieure de l'enceinte (3), sur un conducteur dans le dispositif de puissance (1), ou d'une température ambiante à l'extérieur de l'enceinte (3).

9. Procédé selon l'une quelconque des revendications précédentes, le second algorithme utilisant un modèle d'ordre réduit, ROM, et la base de données (22) étant une base de données ROM.

10. Procédé selon la revendication 9, le ROM estimant des températures pendant l'exécution (S6) du second algorithme sur la base d'une condition limite h*ΔT où h est un coefficient de transfert de chaleur dérivé (S2) par le premier algorithme, et ΔT est une différence de température liée à la température de référence, les valeurs de h ayant été stockées (S3) dans la base de données ROM (22).

11. Procédé selon l'une quelconque des revendications précédentes, le premier environnement de traitement informatique (A) contenant une fonctionnalité pour l'auto-apprentissage.

12. Procédé selon la revendication 11, la fonctionnalité d'auto-apprentissage étant basée sur des données provenant de capteurs de température d'un dispositif de puissance de fonctionnement physique qui est similaire au dispositif de puissance (1).

13. Procédé selon l'une quelconque des revendications 11 à 12, la base de données (22), par exemple la base de données ROM, étant constituée de coefficients de transfert de chaleur h obtenus au moyen du procédé d'auto-apprentissage.

14. Procédé selon l'une quelconque des revendications précédentes, la température estimée d'au moins un point d'emplacement (P) du composant générateur de chaleur (5) étant sauvegardée dans un dossier historique (25).

15. Système de contrôle (2) pour le contrôle thermique d'un dispositif de puissance (1) comprenant une enceinte (3) autour d'un composant générateur de chaleur (5) en contact avec un fluide de refroidissement électriquement isolant en circulation (4), le système de contrôle comprenant :
un premier environnement de traitement informatique (A), configuré pour exécuter un premier algorithme sur la base des informations de conception concernant le dispositif de puissance (1) pour au moins deux états de fonctionnement différents du dispositif de puissance, pour dériver des coefficients relatifs au transfert de chaleur dans le dispositif de puissance pour les au moins deux états de fonctionnement différents ;
une base de données (22) pour stocker les coefficients dérivés ; et
un second environnement de traitement informatique (B), connecté à la base de données (22) et configuré pour recevoir des informations concernant les coefficients stockés et pour, pendant le fonctionnement du dispositif de puissance (1), recevoir des informations concernant des mesures de perte de puissance réalisées par un premier capteur (7a) du dispositif de puissance et des mesures de température de référence réalisées par un second capteur (7b) du dispositif de puissance, et pour exécuter un second algorithme sur la base des coefficients reçus et des informations de mesure pour estimer au moins une température du composant générateur de chaleur (5) dans le dispositif de puissance (1) en temps réel, le second algorithme, par contraste avec l'exécution du premier algorithme, étant exécuté de manière continue et automatique pendant le fonctionnement du dispositif de puissance (1) ;
**caractérisé en ce que** les différents états de fonctionnement sont définis par différentes charges de courant (I), qui donnent des débits de fluide différents, à moins qu'il n'y ait une circulation forcée du fluide de refroidissement.
